# EUROPÄISCHE PATENTSCHRIFT

(11) **EP 0 651 407 B1**
(45) Veröffentlichungstag und Bekanntmachung des Hinweises auf die Patenterteilung: **22.07.1998**
(21) Anmeldenummer: 94115601.0
(22) Anmeldetag: 04.10.1994
(51) Int. Cl.: H01F 41/10, B23K 1/00

(54) **Verfahren zum Kontaktieren des Wicklungsdrahtes einer Spule mit einem Anschlussstift**
Method for connecting a winding wire of a coil with a connector pin
Procédé de connexion d'un fil d'enroulement avec une broche de connexion

(30) Priorität: 21.10.1993 DE 4336000
(43) Veröffentlichungstag der Anmeldung: 03.05.1995
(73) Patentinhaber: SIEMENS AKTIENGESELLSCHAFT, 80333 München (DE)
(72) Erfinder: Hendel, Horst, D-12209 Berlin (DE); Vojta, Erich, D-91334 Hemhofen (DE)

(56) Entgegenhaltungen:
- EP-A- 0 138 072
- WO-A-92/22103
- DE-A- 1 949 413
- DE-A- 2 063 535
- DE-A- 2 106 665
- DE-A- 2 301 094
- DE-A- 2 739 418
- DE-A- 3 036 197
- FR-A- 2 287 121
- PATENT ABSTRACTS OF JAPAN vol. 10, no. 297 (E-444) (2353) 9. Oktober 1986 & JP-A-61 114 512 (MATSUSHITA ELECTRIC IND CO)
- PATENT ABSTRACTS OF JAPAN vol. 10, no. 379 (E-465) (2436) 18. Dezember 1986 & JP-A-61 171 109 (MATSUSHITA ELECTRIC IND CO)

## Beschreibung

Die Erfindung betrifft ein Verfahren zum Kontaktieren des Wicklungsdrahtes einer Spule mit einem Anschlußstift, wobei ein Endabschnitt des Wicklungsdrahtes mit mehreren Windungen um den Anschlußstift geschlungen und durch eine berührungslose, kurzzeitig einwirkende Wärmezufuhr unter Schutzgas und unter Verwendung eines Weichlotes mit dem Anschlußstift verbunden wird.

Allgemein ist es üblich, die Wicklungsanschlüsse von Spulen, beispielsweise von Relaisspulen, durch Eintauchen in ein Lötbad zu kontaktieren. Dabei ist allerdings die Verwendung eines Flußmittels erforderlich, um eine zuverlässige Lötung zu gewährleisten. Diese Flußmittel und Lötbäder entwickeln aber nicht nur giftige Dämpfe, sondern die Flußmittelreste können auch benachbarte Kontaktoberflächen, etwa in einem Relais, im späteren Betriebe schädigen und dadurch beispielsweise den Ausfall eines Relais verursachen. Im übrigen sind die üblichen Lötbäder mit Betriebstemperaturen von etwa 350°C einer starken Verzunderung ihrer Oberfläche ausgesetzt, wodurch große Mengen an Lotabfall entstehen.

Aus Patent Abstracts of Japan, Vol. 10, No. 297 (E-444)(2353),Oct. 9, 1986, ist es bekannt, auf den Anschlußstift einer Spule vor dem Anwickeln des Wicklungsendes einen Ring aus Lötmaterial aufzusetzen, der beim Löten abschmilzt und so eine Zugentlastung des Wicklungsendes ergibt. Das eigentliche Löten erfolgt aber auch dort durch Eintauchen in ein Lötbad, so daß die oben genannten Nachteile des herkömmlichen Lötens einschließlich der hierbei erforderlichen Flußmittel nicht beseitigt sind.

Um die unerwünschten Flußmittel entbehrlich zu machen, wurde bereits verschiedentlich vorgeschlagen (DE-A-2 063 535), die Wicklungsenden durch Lichtbogenschweißung unter Schutzgas (WIG-Schweißen) mit dem jeweiligen Anschlußstift zu verschmelzen. Die hohen Schweißtemperaturen stellen jedoch unter Umständen eine zu hohe Belastung für den Spulenkörper dar. In der DE-A-2 301 094 die ein Verfahren zum Kontaktieren des Wicklungsdrahtes einer Spule mit einem Anschlussstift gemäss dem Oberbegriff des Anspruchs 1 beschreibt, wurde auch bereits vorgeschlagen, beim Lichtbogen schweißen einen vorverzinnten Anschlußstift zu verwenden, um den nicht verschweißten Abschnitt des angewickelten Drahtes durch das Lot festzuhalten. Allerdings dient dort das Lot ausdrücklich nicht zur Kontaktierung des Drahtes; diese erfolgt nach wie vor durch Verschweißen am Stiftende mit den entsprechend hohen Schweißtemperaturen.

Ziel der vorliegenden Erfindung ist es, ein Kontaktierungsverfahren für Wicklungsanschlüsse anzugeben, das einerseits ohne Flußmittel auskommt und andererseits die hohen Schweißtemperaturen mit der entsprechenden Wärmebelastung vermeidet.

Erfindungsgemäß wird dieses Ziel mit einem Verfahren der eingangs genannten Art erreicht, bei dem das Lot frei von Flußmitteln nach dem Anwickeln des Wicklungsdrahtes mit dem Anschlußstift in Kontakt gebracht und anschließend durch die Wärmequelle bei Löttemperatur aufgeschmolzen wird.

Bei dem erfindungsgemäßen Verfahren wird also das Lot getrennt zugeführt und dann über dem angewickelten Wicklungsdraht aufgeschmolzen, wobei durch das Schutzgas die Verwendung eines Flußmittels vermieden wird. Das Aufschmelzen erfolgt über eine Wärmequelle wie beim Schweißen, wobei diese jedoch so bemessen ist, daß lediglich eine Löttemperatur von beispielsweise 300 bis 400°C am Anschlußstift erreicht wird. Dabei wären verschiedene Schweißverfahren, wie beispielsweise die Verwendung eines Lasers, denkbar. Vorzugsweise erfolgt die Wärmezufuhr jedoch durch einen Lichtbogen unter Schutzgas (WIG-Lichtbogen). Die Brenndauer des Lichtbogens hängt ab von den verwendeten Materialstärken; bei üblichen Anschlußstiften mit einem Durchmesser von beispielsweise 0,6 mm genügt eine Lichtbogenbrenndauer von etwa 100 bis 200 msec bei einem Lichtbogenstrom von etwa 2 A. Durch die kleine Lichtbogenleistung mit kurzer Wirkdauer und einer gegenüber dem Schweißverfahren vergleichsweise niedrigen Temperatur wird der Spulenkörper-Kunststoff nur gering belastet; eine Schutzabdeckung ist dabei nicht erforderlich. Außerdem ist der Elektrodenverschleiß gering im Vergleich zu bekannten Schweißverfahren.

Die Lotzufuhr nach dem Anwickeln des Wicklungsdrahtes kann auf verschiedene Arten erfolgen. Ein vorteilhaftes Verfahren besteht darin, die Stiftspitzen kurzzeitig in ein Lotbad einzutauchen, dessen Temperatur nur geringfügig über dem Schmelzpunkt des Lotes liegt. Bei einer derart niedrigen Temperatur des Lotbades erfolgt praktisch keine Verzunderung. Durch das Eintauchen wird das Wicklungsende auch nicht verlötet. Vielmehr bleibt an dem Ende des Anschlußstiftes die benötigte Lotmenge in Form eines tropfenförmigen Überzuges haften. Dieser Überzug verfließt beim nachfolgenden WIG-Löten bauchförmig über den Bereich des angewickelten Drahtes.

Eine weitere Möglichkeit zur Lotzufuhr besteht darin, jeweils eine vorgegebene Lotmenge in Ringform bereitzustellen, beispielsweise von einem rohrförmigen Vorrat abzuschneiden, und auf das freie Ende des Anschlußstiftes aufzusetzen. Danach kann dieser Lotring unter Schutzgas, wie vorher beschrieben, aufgeschmolzen werden.

Eine weitere Möglichkeit besteht darin, das Lot in Form eines Drahtes zuzuführen, wobei jeweils ein Endabschnitt des Lotdrahtes mit dem Anschlußstift in Berührung gebracht und dann abgeschmolzen wird. Hierbei kann der Draht über eine besondere Vorrichtung zugeführt werden, welche mittels eines Führungsrohres den Draht ausrichtet und jeweils einen um eine vorgegebene Länge vorgeschobenen Endabschnitt in Kontakt mit dem Anschlußstift bringt. Das Führungsrohr kann dabei eine Verlängerung aufweisen, die den Endabschnitt einseitig stützt, zugleich aber den Kontakt mit dem Anschlußstift und das Abschmelzen durch die Wärmequelle ermöglicht.

Die Erfindung wird nachfolgend an einem Ausführungsbeispiel anhand der Zeichnung näher erläutert. Es zeigt
Figur 1 eine Relaisspule mit verlöteten Wicklungsenden,
Figur 2 und 3 einen Anschlußstift in zwei Seitenansichten,
Figur 4 die Kontaktierung eines Wicklungsdrahtes an einem Anschlußstift in drei aufeinanderfolgenden Phasen,
Figur 5 eine schematische Darstellung der verschiedenen Phasen beim erfindungsgemäßen Lötverfahren,
Figur 6 eine schematische Darstellung einer WIG-Lötanordnung mit einem Führungsrohr zur Zufuhr eines Lotdrahtes,
Figur 7a und 7b zwei Schnittansichten VIIa-VIIa und VIIIb-VIIIb aus Figur 6 und
Figur 8 eine Draufsicht VIII auf die Drahtzuführvorrichtung von Figur 6, ebenfalls schematisch,
Figur 9 einen Anschlußstift mit einem in Ringform zugeführten Lot.

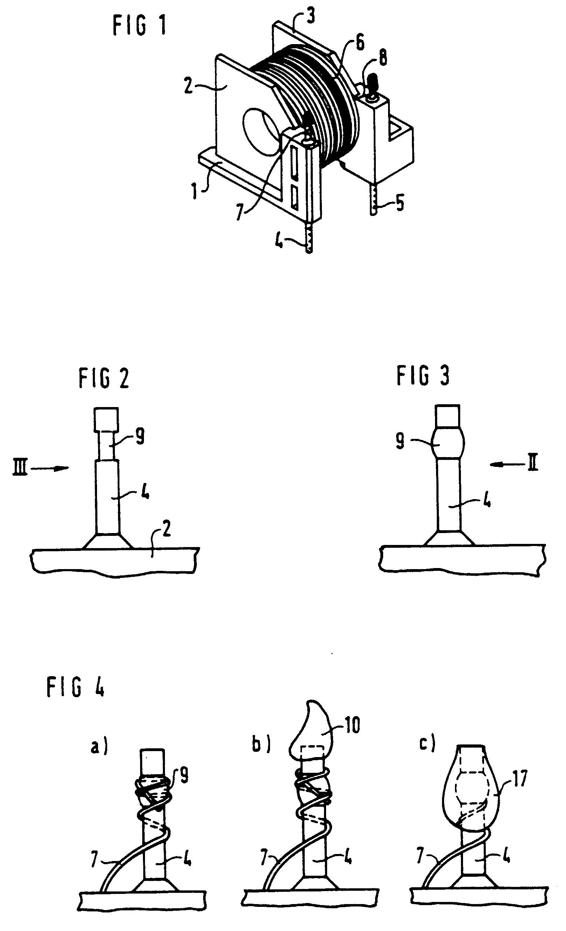

In Figur 1 ist beispielshalber eine Relaisspule dargestellt, bei der das erfindungsgemäße Verfahren anwendbar ist. Die Spule besitzt einen Spulenkörper 1 aus Kunststoff mit zwei Flanschen 2 und 3, in denen je ein Anschlußstift 4 bzw. 5 verankert ist. Zwischen den Flanschen trägt der Spulenkörper eine Wicklung 6, deren Wicklungsanfang 7 am oberen Ende des Anschlußstiftes 4 und dessen Wicklungsende 8 am oberen Ende des Anschlußstiftes 5 angewickelt und verlötet sind.

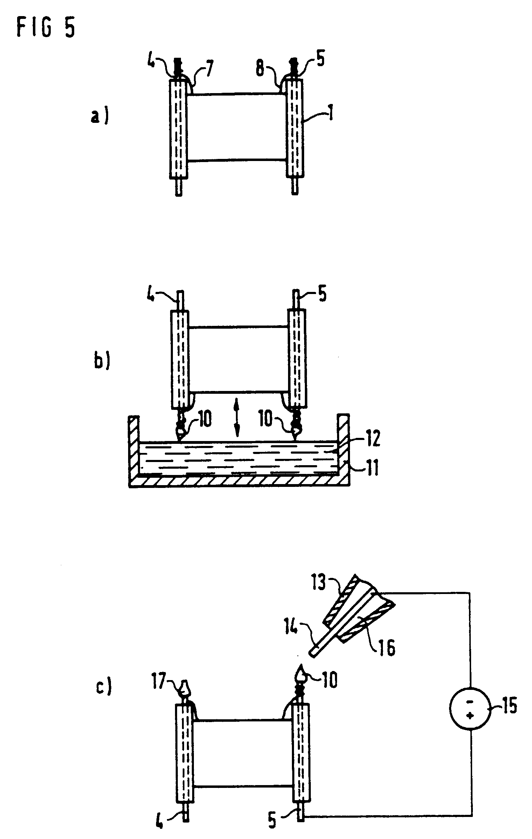

Figur 2 und 3 zeigen in zwei Seitenansichten den Endabschnitt eines Anschlußstiftes 4, der in dem Spulenflansch 2 verankert ist. Der runde Anschlußstift 4 ist teilweise zu einer flachen Zone 9 gequetscht, damit in dieser Zone der nur mit wenigen Windungen um den Stift geschlungene Anschlußdraht 7 lagefest verankert bleibt und sich nicht von selbst wieder löst. Die einzelnen Phasen der Kontaktierung zwischen dem Anschlußstift 4 und dem Wicklungsende 7 sind in Figur 4 dargestellt. Gemäß Figur 4a wird das Wicklungsende 7 mit wenigen Windungen um den Anschlußstift 4, insbesondere um die Zone 9, geschlungen. Nach Figur 4b wird dann eine bestimmte Menge an Weichlot mit dem Anschlußstift 4 in Kontakt gebracht. Im vorliegenden Fall geschieht dies nach dem Tauchverfahren gemäß Figur 5b, so daß am freien Ende des Anschlußstiftes 4 die zugeführte Lotmenge als Lottropfen anhaftet.

Durch Erwärmung des Weichlotes 10 auf Löttemperatur, also auf etwa 300 bis 400°C, mittels einer Schweißanlage unter Schutzgas verfließt der aufgebrachte Lottropfen 10 über den Bereich des angewickelten Wicklungsdrahtes 7 und bildet nach dem Erstarren die in Figur 4c gezeigte Bauform. Der Isolierlack des Wicklungsdrahtes 7 schmilzt dabei ab, so daß der Wicklungsdraht zuverlässig mit dem Anschlußstift 4 mechanisch und elektrisch verbunden ist.

Das Kontaktierungsverfahren selbst ist schematisch in drei Phasen in Figur 5 gezeigt. Figur 5a zeigt schematisch noch einmal einen Spulenkörper 1 mit den Anschlußstiften 4 und 5 und den angewickelten Wicklungsenden 7 und 8.

In Figur 5b ist eine Möglichkeit gezeigt, das benötigte Weichlot den Anschlußstiften zuzuführen. Wie dargestellt, ist hierzu ein Lötbad 11 vorgesehen, in welchem sich ein Weichlot 12, beispielsweise ein Blei-Zinn-Lot, befindet. Dieses Lot wird auf einer Temperatur gehalten, die nur geringfügig über dem Schmelzpunkt des Lotes liegt. Das bedeutet, daß beispielsweise ein Sn-Pb-Lot mit einem Schmelzpunkt von 184°C hier in dem Lötbad mit einer Temperatur von etwa 186°C gehalten wird. Das Lot hat bei dieser niedrigen Temperatur eine oxidfreie Oberfläche und ist daher für das Löten ohne Flußmittel besonders vorteilhaft. Die niedrige Verarbeitungstemperatur ermöglicht konstante und langlebige Ergiebigkeit, so daß praktisch keine Lotabfälle im Bad entstehen.

Der Spulenkörper wird gemäß Figur 5b mit den Spitzen der Anschlußstifte 4 und 5 in das Lot 12 getaucht, so daß die gezeigten Lottropfen 10 entstehen.

Wie in Figur 5c gezeigt, werden die Lottropfen 10 mittels eines WIG-Schweißbrenners 13 aufgeschmolzen. Zwischen der Elektrode 14 und dem Anschlußstift 5 wird von einer Stromquelle 15 ein Schweißstrom, beispielsweise in der Größenordnung von 2 A oder mehr, angelegt, um einen Lichtbogen von beispielsweise 200 msec Dauer zu zünden. Gleichzeitig wird über eine Schutzgasdüse 16 Schutzgas, z. B. Argon, auf die Lötstelle geblasen, um Verzunderungen an den Verbindungselementen bei den relativ hohen Löttemperaturen des Lichtbogens zu verhindern. Beim Löten verfließt der Tropfen 10 zu einem Bauch 17, wie er in Figur 5c am Anschlußstift 4 bereits in fertiger Form gezeigt ist.

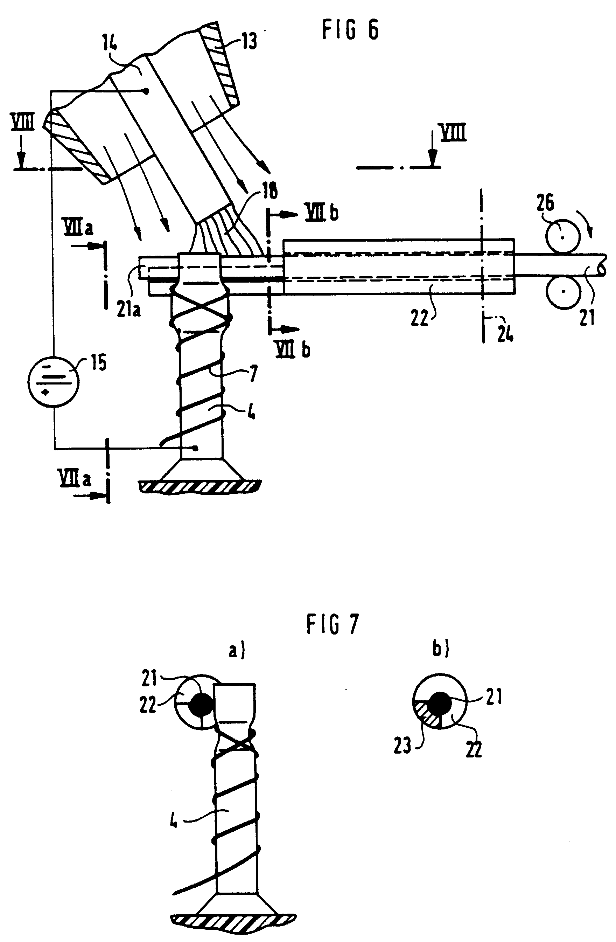

In den Figuren 6 bis 8 ist eine weitere Ausführungsmöglichkeit des erfindungsgemäßen Lötverfahrens gezeigt, wobei das Lot in Drahtform zugeführt wird. Wie im vorhergehenden Ausführungsbeispiel wird auch hier der Anschlußstift 4 mit seinem angewickelten Wicklungsende 7 in die richtige Position gegenüber eines WIG-Schweißbrenners 13 und deren Elektrode 14 gebracht. Auch in diesem Fall ist eine Gleichstromquelle 15 zur Erzeugung des Schweißstroms angeschlossen, und über die Schutzgasdüse 16 wird Schutzgas auf die Lötstelle geblasen. Im Gegensatz zu dem vorher beschriebenen Ausführungsbeispiel wird jedoch nunmehr das Lot in Form eines Lotdrahtes 21 zugeführt, und zwar über ein Führungsrohr 22, welches eine fingerförmige Verlängerung 23 aufweist. Diese Verlängerung 23 besitzt die Form eines Kreismantelsegmentes (siehe Figur 7b), wodurch sie einen Endabschnitt 21a des Lotdrahtes von einer Seite stützen kann, während dieser zum Anschlußstift 4 hin und nach oben zur Wärmequelle hin freiliegt. Das Führungsrohr 22 ist auf eine nicht näher dargestellte Weise um eine Achse 24 schwenkbar gelagert und kann mit einer seitlichen Kraft, beispielsweise durch eine Feder 25, beaufschlagt werden, um den Endabschnitt 21a des Lotdrahtes an den Anschlußstift 4 anzudrücken. Über eine ebenfalls nur schematisch dargestellte Vorschubeinrichtung 26 wird der Lotdraht 21 durch das Führungsrohr 22 geschoben.

Beim Lötvorgang wird jeweils eine bestimmte Länge des Lotdrahtes 21 durch das Führungsrohr 22 mit Hilfe der Vorschubeinrichtung 26 vorgeschoben, so daß es dem freien Ende des Anschlußstiftes 4 gegenübersteht und durch die Feder 25 mit letzterem in Kontakt gebracht werden kann. Durch weiter nicht dargestellte Vorrichtungen kann dabei eine Feinpositionierung zwischen dem Anschlußstift 4 und dem Drahtende 21a auch in der Höhe vorgenommen werden. Auch die Elektrode 14 des WIG-Schweißbrenners 13 wird gegenüber dem Anschlußstift 4 und dem Führungsrohr richtig positioniert. Wie aus Figur 6 zu ersehen ist, ist dabei die Elektrode 14 mit ihrem Ende gegenüber der Achse des Anschlußstiftes 4 in Richtung zum Führungsrohr 22 hin etwas versetzt, so daß der Lichtbogen 18 an dieser, dem Führungsrohr 22 zugewandten Seite des Anschlußstiftes gezündet wird. Auf diese Weise wird der Lotdraht durchgeschmolzen, und der Endabschnitt 21a bleibt an dem Anschlußstift 4 haften, wo er wie im vorhergehenden Fall zu einem Bauch 17 (Figur 4c) verschmilzt. Um ein Anhaften des restlichen Lotdrahtes 21 an dem Anschlußstift zu vermeiden, wird dieser durch die Vorschubeinrichtung 26 noch während der Brenndauer des Lichtbogens zurückgezogen. Beispielsweise kann die Lichtbogenbrenndauer in Abhängigkeit von der Dicke des Anschlußstiftes 4 etwa 300 msec betragen. In diesem Fall wird dann zweckmäßigerweise nach etwa 200 msec Brenndauer der Lotdraht zurückgezogen, während der Lichtbogen noch etwa 100 msec weiterbrennt.

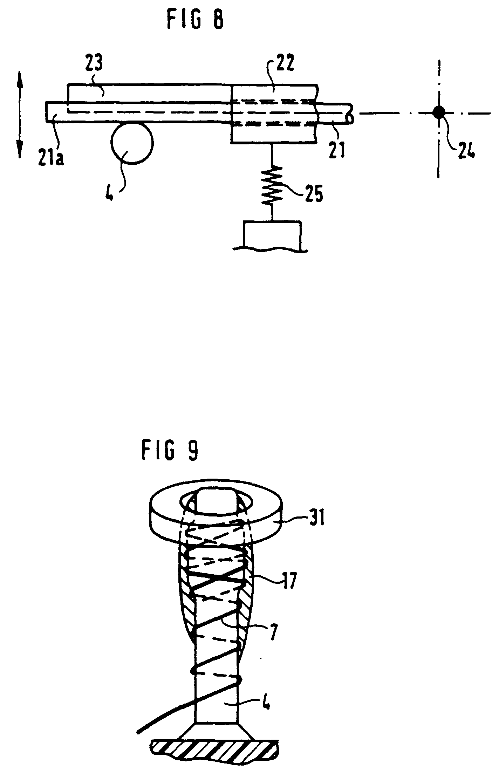

Figur 9 zeigt in einer weiteren Ausführungsform schematisch die Möglichkeit, auf den Anschlußstift 4 eine vorgegebene Lotmenge in Form eines Ringes 31 aufzusetzen. Das Aufschmelzen erfolgt dann in gleicher Weise wie in den vorherigen Beispielen.

## Patentansprüche

1. Verfahren zum Kontaktieren des Wicklungsdrahtes (6) einer Spule mit einem Anschlußstift (4, 5), wobei ein Endabschnitt (7, 8) des Wicklungsdrahtes mit mehreren Windungen um den Anschlußstift geschlungen und durch eine berührunglose, kurzzeitig einwirkende Wärmezufuhr (13) unter Schutzgas und unter Verwendung eines Weichlotes mit dem Anschlußstift verbunden wird,
**dadurch gekennzeichnet,** daß das Lot (10) frei von Flußmitteln nach dem Anwickeln des Wicklungsdrahtes mit dem Anschlußstift (4, 5) in Kontakt gebracht und anschließend durch die Wärmequelle (13) bei Löttemperatur aufgeschmolzen wird.

2. Verfahren nach Anspruch 1,
**dadurch gekennzeichnet,** daß die Wärmezufuhr durch einen Lichtbogen unter Schutzgas (WIG-Lichtbogen) erfolgt.

3. Verfahren nach Anspruch 2,
**dadurch gekennzeichnet,** daß der Lichtbogen je nach dem Querschnitt des Anschlußstiftes eine Brenndauer von 100 bis 300 msec aufweist und daß der Schweißstrom so eingestellt wird, daß eine Temperatur von 300 bis 400°C erreicht wird.

4. Verfahren nach Anspruch 1,
**dadurch gekennzeichnet,** daß die Wärmezufuhr durch einen Laserstrahl erfolgt.

5. Verfahren nach einem der Ansprüche 1 bis 4,
**dadurch gekennzeichnet,** daß der Anschlußstift (4, 5) vor dem Anwickeln des Wicklungsendes in dem Anwickelbereich zu einer nicht runden Querschnittsform geprägt wird.

6. Verfahren nach einem der Ansprüche 1 bis 5,
**dadurch gekennzeichnet,** daß die Lotaufbringung durch kurzzeitiges Eintauchen der Stiftspitzen in ein Lotbad erfolgt, dessen Temperatur nur geringfügig über dem Schmelzpunkt des Lotes liegt, und daß die dabei anhaftende Lotmenge anschließend aufgeschmolzen wird.

7. Verfahren nach einem der Ansprüche 1 bis 5,
**dadurch gekennzeichnet,** daß das Lot in Form eines vorgeformten Ringes (31) auf das freie Ende des Anschlußstifte (4) aufgesteckt und danach aufgeschmolzen wird.

8. Verfahren nach einem der Ansprüche 1 bis 5,
**dadurch gekennzeichnet,** daß das Lot in Form eines Drahtes (21) zugeführt wird, wobei ein Endabschnitt (21a) des Lotdrahtes mit dem Anschlußstift (4) in Berührung gebracht und dann abgeschmolzen wird.

## Claims

1. Method for contacting the winding wire (6) of a coil with a terminal post (4, 5), an end portion (7, 8) of the winding wire being looped with a plurality of turns around the terminal post and being connected to the terminal post by a contactless, briefly acting supply of heat (13), under inert gas and using a soft solder, characterized in that, after the winding wire has been wound on, the solder 10) is brought into contact, free of fluxes, with the terminal post (4, 5) and is subsequently melted by the heat source (13) at the soldering temperature.

2. Method according to Claim 1, characterized in that heat is supplied by an arc under inert gas (TIG arc).

3. Method according to Claim 2, characterized in that the arc has a burn time of 100 to 300 msec, depending on the cross-section of the terminal post, and in that the welding current is set in such a way that a temperature of 300 to 400°C is reached.

4. Method according to Claim 1, characterized in that heat is supplied by a laser beam.

5. Method according to one of Claims 1 to 4, characterized in that, before the winding end is wound on, the terminal post (4, 5) is pressed into a non-round cross-sectional shape in the winding-on region.

6. Method according to one of Claims 1 to 5, characterized in that the solder is applied by dipping the post tips briefly into a solder bath, the temperature of which is only slightly above the melting point of the solder, and in that the quantity of solder adhering during this is subsequently melted.

7. Method according to one of Claims 1 to 5, characterized in that the solder is slipped in the form of a preshaped ring (31) onto the free end of the terminal post (4) and is thereafter melted.

8. Method according to one of Claims 1 to 5, characterized in that the solder is supplied in the form of a wire (21), an end portion (21a) of the solder wire being brought into contact with the terminal post (4) and then being melted.

## Revendications

1. Procédé de connexion du fil d'enroulement (6) d'une bobine avec une broche de connexion (4, 5), un segment d'extrémité (7, 8) du fil d'enroulement étant enroulé autour de la broche de connexion avec plusieurs spires et relié à la broche de connexion grâce à un apport de chaleur (13) sans contact dont l'action est brève, sous gaz protecteur, et en utilisant un métal d'apport de brasage tendre,
caractérisé en ce que le métal d'apport (10), exempt de fondant, est mis en contact avec la broche de connexion (4, 5) après que le fil d'enroulement a été enroulé, et est ensuite fondu à la température de brasage sous l'effet de la source de chaleur (13).

2. Procédé selon la revendication 1, caractérisé en ce que l'apport de chaleur est réalisé par un arc sous gaz protecteur (arc TIG).

3. Procédé selon la revendication 2, caractérisé en ce que l'arc a une durée de 100 à 300 ms, en fonction de la section transversale de la broche de connexion, et en ce que le courant de soudage est réglé de manière à ce que l'on atteigne une température allant de 300 à 400°C.

4. Procédé selon la revendication 1, caractérisé en ce que l'apport de chaleur est réalisé par un rayon laser.

5. Procédé selon l'une des revendications 1 à 4, caractérisé en ce que la broche de connexion (4, 5) est matricée dans la zone d'enroulement, avant que l'extrémité d'enroulement soit enroulée, de manière à obtenir une section transversale dont la forme ne soit pas ronde.

6. Procédé selon l'une des revendications 1 à 5, caractérisé en ce que l'application du métal d'apport s'effectue par une brève immersion des pointes des broches dans un bain de brasage dont la température n'est que légèrement supérieure au point de fusion du métal d'apport, et en ce que la quantité de métal d'apport adhérant lors de cette immersion est ensuite fondue.

7. Procédé selon l'une des revendications 1 à 5, caractérisé en ce que le métal d'apport est placé sur l'extrémité libre de la broche de connexion (4) sous la forme d'une bague préformée (31) et est ensuite fondu.

8. Procédé selon l'une des revendications 1 à 5, caractérisé en ce que le métal d'apport est alimenté sous la forme d'un fil (21), un segment d'extrémité (21a) du métal d'apport en fil étant mis en contact avec la broche de connexion (4) puis fondu.
